# FASCICULE DE BREVET EUROPEEN

(11) **EP 0 703 467 B1**
(45) Date de publication et mention de la délivrance du brevet: **27.06.2001**
(21) Numéro de dépôt: 95402118.4
(22) Date de dépôt: 20.09.1995
(51) Int. Cl.: G01S 17/58, G01S 7/499

(54) **Tête d'émission-réception pour anémomètre doppler longitudinal**
Sender-Emfänger für ein Längsdoppleranemometer
Emission and reception head for a longitudinal Doppler anemometer

(30) Priorité: 22.09.1994 FR 9411308
(43) Date de publication de la demande: 27.03.1996
(73) Titulaire: SEXTANT AVIONIQUE S.A., 92366 Meudon la Forêt Cédex (FR)
(72) Inventeur: Morbieu, Bertrand, F-33200 Bordeaux (FR)
(74) Mandataire: Geismar, Thierry

(56) Documents cités:
- DE-A- 3 435 423
- US-A- 4 199 226
- REVIEW OF SCIENTIFIC INSTRUMENTS, JULY 1984, USA, vol. 55, no. 7, ISSN 0034-6748, NEW YORK, NY, US, pages 1090-1093, BAHNEN R H ET AL 'Laser Doppler velocimeter for multicomponent measurements using an electro-optical modulator demonstrated for a two-component optical configuration'
- NASA TECH BRIEFS, vol. 1, no. 2, 1976 WASHINGTON DC, US, pages 182-183,

## Description

La présente invention concerne une tête d'émission-réception pour anémomètre Doppler longitudinal à laser, et plus particulièrement pour un tel anémomètre à au moins une paire d'axes de mesure.

On connaît déjà des techniques d'anémométrie Doppler longitudinal dans lesquelles on émet un faisceau laser de fréquence f à partir d'un véhicule, notamment un aéronef, en mouvement par rapport à l'air ambiant. On reçoit la lumière rétrodiffusée par les aérosols en suspension dans l'air, et on mesure le décalage Doppler Δf de la fréquence de la lumière rétrodiffusée par rapport à la fréquence f. On sait que le décalage Doppler Δf est proportionnel à la projection de la vitesse du véhicule sur l'axe de mesure.

Par conséquent, on peut déterminer le vecteur vitesse en effectuant trois mesures sur trois axes de mesure différents. En fait, on choisira de préférence quatre axes de mesure afin de disposer d'une information redondante.

On observera que l'on connaît également, par exemple par le document "REVIEW OF SCIENTIFIC INSTRUMENTS, JULY 1984, USA, vol.55. n° 7, ISSN 0034-6748, NEX YORK, NY, US, pages 1090-1093, BAHNEN R H ET AL, *Laser Doppler velocimeter for multicomponent measurements using an electro-optical modulator demonstrated for a two-component optical configuration",* des anémomètre à laser à franges fonctionnant sur un principe différent. Dans ce type d'anémomètre, les axes d'émission de deux faisceaux sont sécants à distance et l'on fait interférer les deux faisceaux pour en extraire une composante du vecteur vitesse.

On a également proposé dans le document "NASA TECH BRIEF, vol.1, n° 2, 1976 WASHINGTON DC, US, pages 182-183" d'utiliser une lame quart d'onde dans un anémomètre laser à miroir tournant fonctionnant également selon un principe différent de celui des anémomètres laser longitudinaux.

Par ailleurs, le document US-A-4 199 226 décrit une utilisation d'un prisme de Glan dans des dispositifs d'émission-réception à laser tels que des télémètres, des spectroscopes ou des détecteurs de pollution d'air. Aucune application n'est mentionnée dans le domaine des anémomètres laser longitudinaux.

Il est souhaitable dans les anémomètres laser longitudinaux, tant pour des raisons de poids que de coût, de former tous les faisceaux à partir d'un laser unique. Il faut donc pouvoir diviser le faisceau émis par le laser de manière à le diriger sur les différents axes de mesure choisis. Il est également souhaitable de ne pas diriger le faisceau simultanément sur tous les axes de mesure, afin de bénéficier d'une puissance plus importante pour chaque mesure.

L'invention vise à fournir une tête d'émission-réception pour un anémomètre présentant les caractéristiques précitées et qui, de plus, de préférence, ne comporte pas de pièces mécaniques en mouvement, dont les vibrations seraient nuisibles aussi bien à la fiabilité du matériel qu'à la précision de la mesure.

A cet effet, l'invention a pour objet une tête d'émission-réception pour anémomètre laser longitudinal selon la revendication 1.

Ainsi, un seul laser est utilisé dans la tête d'émission-réception selon l'invention, et sa puissance est alternativement commutée sur l'un et l'autre des axes d'une paire d'axes de mesure.

La lame a pour effet de transformer le faisceau polarisé linéairement en un faisceau polarisé circulairement. Les aérosols ayant une forme généralement sphérique, la polarisation du faisceau rétrodiffusé est circulaire inversée. Après la lame quart d'onde, le faisceau rétrodiffusé est donc polarisé linéairement, mais à 90' du faisceau d'entrée. Il ressort donc toujours dans la même direction des moyens séparateurs de polarisation et peut être collecté à ce niveau par des moyens appropriés, par exemple par une fibre optique.

Les moyens séparateurs peuvent par exemple être réalisés à partir d'un prisme de Glan. De même, les moyens de commutation de polarisation peuvent être réalisés à partir de moyens à effet électro-optique tels, par exemple, qu'une cellule à effet Pockels, qu'un cristal liquide nématique ou ferroélectrique, ou qu'un cristal de ZnSe à effet élasto-optique. La tête d'émission-réception selon l'invention permet par conséquent d'atteindre les objectifs recherchés sans moyens mécaniques.

Dans un mode de réalisation particulier, l'optique de sortie de la tête d'émission-réception selon l'invention est constituée d'un télescope.

On décrira maintenant, à titre d'exemple non limitatif, un mode de réalisation particulier de l'invention, en référence aux dessins annexés dans lesquels:
- la figure 1 est une vue en coupe d'une tête d'émission-réception selon l'invention, pour un anémomètre à quatre axes de mesure;
- la figure 2 est une vue en coupe des moyens séparateurs de polarisation représentés à la figure 1, selon la ligne II-II de la figure 3;
- la figure 3 est une vue de face des moyens séparateurs de polarisation;
- la figure 4 est une vue en coupe selon la ligne IV-IV de la figure 3; et
- les figures 5 et 6 sont des figures analogues aux figures 2 et 3 pour une autre polarisation du faisceau d'entrée.

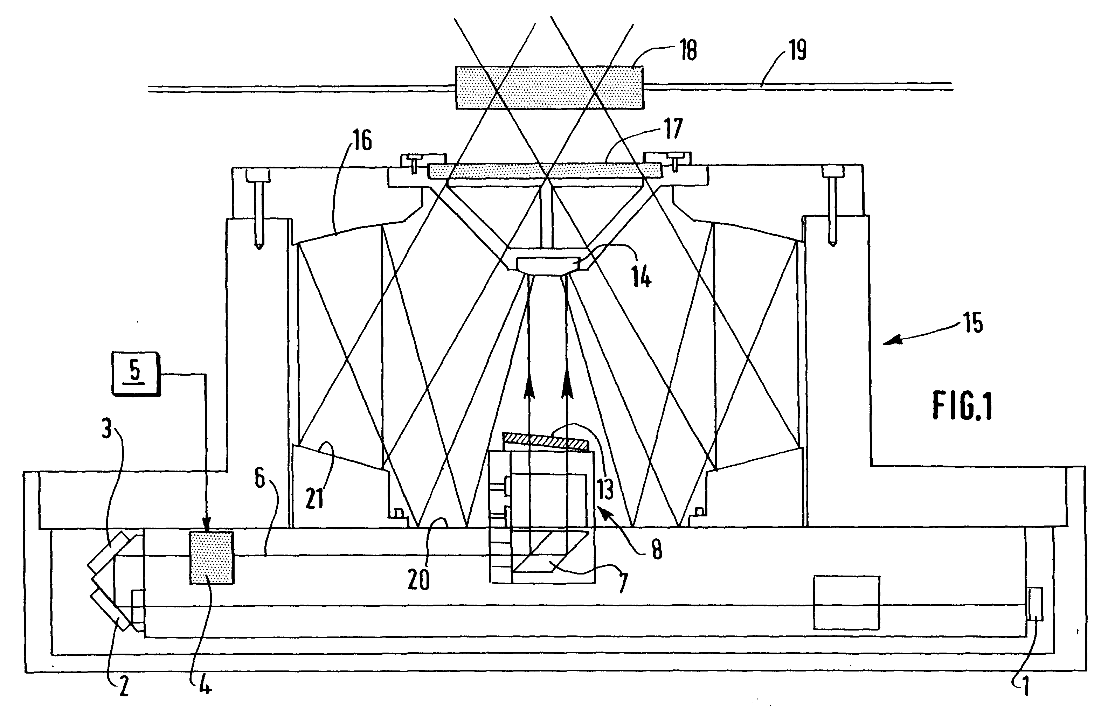

La tête d'émission-réception représentée à la figure 1 comprend un laser 1 dont le faisceau est renvoyé par des miroirs 2 et 3 à des moyens de commutation de polarisation 4, par exemple à cristaux liquides Des moyens de commande 5 commutent les moyens 4 de manière que le faisceau 6 qui en est issu présente alternativement des polarisations linéaires décalées de 90°.

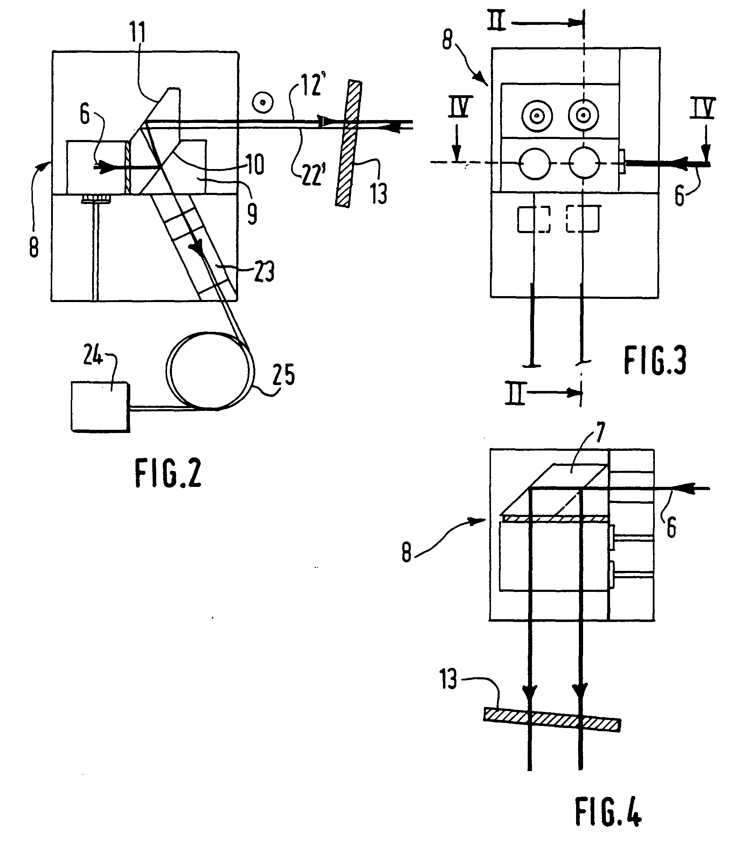

Le faisceau 6 est ensuite divisé en deux faisceaux parallèles dans un prisme 7 et, à la sortie du prisme 7, les deux faisceaux ainsi obtenus traversent le séparateur de polarisation 8 que l'on décrira maintenant en référence aux figures 2 à 6.

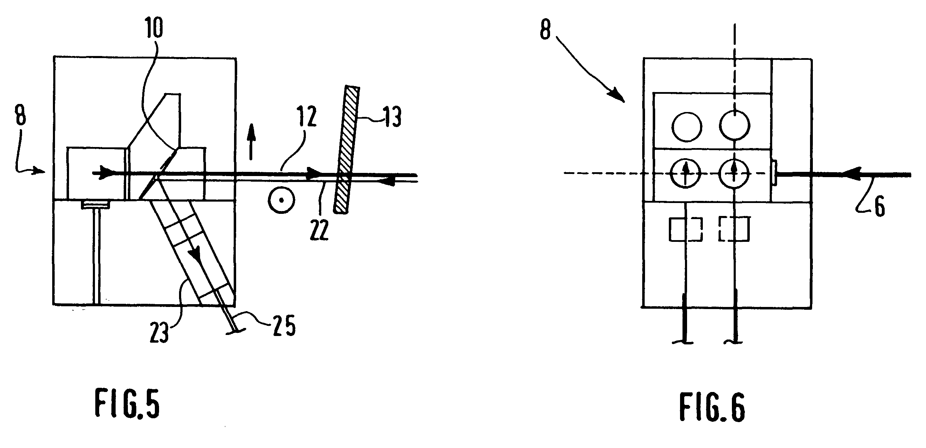

Le séparateur 8 est formé d'un prisme de Glan 9 dont la face active 10 soit est traversée par les deux faisceaux (figures 5 et 6), soit les réfléchit vers un miroir 11 (figures 2 et 3), selon leur état de polarisation. La face 10 du prisme de Glan et le miroir 11 sont parallèles, de sorte que les faisceaux de sortie du séparateur 8, c'est-à-dire soit les deux faisceaux traversants 12 soit les deux faisceaux deux fois réfléchis 12', sont parallèles.

Ces faisceaux traversent ensuite une lame quart d'onde 13 dont les faisceaux de sortie possèdent donc une polarisation circulaire.

Ces derniers faisceaux sont renvoyés par le petit miroir 14 d'un télescope 15 vers le grand miroir 16 qui les dirige à son tour vers l'extérieur dans les directions des quatre axes de mesure, à travers le hublot de sortie de l'appareil 17 et le hublot 18 formé dans la peau 19 de l'aéronef sur lequel l'anémomètre est monté.

En fait, le grand miroir 16 du télescope 15 ne comprend que quatre miroirs élémentaires, un pour chaque faisceau issu du séparateur de polarisation 8. Par ailleurs, les faisceaux lumineux sont repliés à l'intérieur du télescope par deux jeux de quatre miroirs plans 20 et 21, ce qui permet de diminuer la longueur du dispositif.

On remarquera qu'aucun faisceau ne se trouve en incidence normale, ce qui a pour conséquence d'éliminer l'effet dit " effet Narcisse ".

La lumière rétrodiffusée par les aérosols de l'air, et dont la polarisation circulaire est donc inversée, est recollectée par le télescope 15, à la suite de quoi elle retraverse la lame quart d'onde 13. Les faisceaux rétrodiffusés 22 et 22' respectivement, pénétrant dans le séparateur de polarisation 8, sont donc polarisés linéairement, mais avec un décalage de 90° par rapport aux faisceaux incidents.

Par conséquent, le faisceau 22 issu du faisceau 12 ayant traversé la face 10 du prisme de Glan, est réfléchi par cette même face (figure 5). De même, le faisceau 22' issu du faisceau 12' ayant été réfléchi par la face 10 traverse cette face (figure 2). Tous les faisceaux rétrodiffusés sont donc renvoyés vers une optique de collimation 23 et, de là, vers un analyseur 24, par l'intermédiaire d'une fibre optique 25. La fibre optique 25 est de préférence une fibre à conservation de polarisation, de manière à permettre une détection cohérente (à l'aide d'un oscillateur local) au niveau de l'analyseur 24.

Les moyens de commande 5 commutent les moyens de commutation de polarisation 4 alternativement d'un état à un autre. Ainsi, le séparateur de polarisation 8 laisse alternativement passer les faisceaux 12 et 12' ce qui à pour effet de permettre à l'analyseur 24 de traiter alternativement deux axes de mesure puis les deux autres axes.

## Revendications

1. Tête d'émission-réception pour anémomètre Doppler longitudinal à laser, à au moins une paire d'axes de mesure, caractérisée par le fait qu'elle comprend :
- des moyens de commutation de polarisation (4) sur le trajet du faisceau laser ;
- des moyens séparateurs de polarisation (8) sur le trajet du faisceau polarisé issu des moyens de commutation ;
- des moyens de commande (5) pour commuter les moyens de commutation alternativement d'un état à un autre de manière à diriger le faisceau alternativement sur un axe de mesure puis sur un autre en fonction de son état de polarisation ;
- les moyens séparateurs étant agencés de sorte que le faisceau qui en est issu est déplacé parallèlement à lui-même lors de la commutation, une optique de sortie (15) étant agencée pour diriger le faisceau sur un des axes de mesure en fonction de son déplacement ;
- et une lame quart d'onde (13) étant prévue à la sortie des moyens séparateurs de polarisation.

2. Tête d'émission-réception selon la revendication 1, dans laquelle les moyens séparateurs comprennent un prisme de Glan (9).

3. Tête d'émission-réception selon l'une quelconque des revendications 1 et 2, dans laquelle les moyens de commutation de polarisation comprennent des moyens à effet électro-optique.

4. Tête d'émission-réception selon l'une quelconque des revendications 1 et 2, dans laquelle les moyens de commutation de polarisation comprennent des moyens à effet élasto-optique.

5. Tête d'émission-réception selon l'une quelconque des revendications 1 à 4, comprenant un télescope formant optique de sortie.

## Patentansprüche

1. Sende-/Empfangskopf für Doppler-Laser-Längswindmesser mit mindestens einem Paar Messachsen, dadurch gekennzeichnet, dass er umfasst
- Polarisierungsumschaltmittel (4) auf dem Laserstrahlweg,
- Polarisierungstrennmittel (8) auf dem Weg des polarisierten, aus den Umschaltmitteln kommenden Strahls,
- Steuermittel (5) zum abwechselnden Umschalten der Umschaltmittel von einem Zustand in einen anderen, um den Strahl je nach Polarisierungszustand abwechselnd auf eine Messachse und dann auf eine andere zu richten,
- wobei die Trennmittel so angeordnet sind, dass der aus ihnen austretende Strahl bei der Umschaltung parallel zu ihm selbst verschoben wird, wobei eine Ausgangsoptik (15) vorgesehen ist, um den Strahl entsprechend seiner Verschiebung auf eine der Messachsen zu richten,
- wobei am Ausgang der Polarisierungstrennmittel ein Lambda-Viertelwellenplättchen vorgesehen ist.

2. Sende-/Empfangskopf nach Anspruch 1, bei dem die Trennmittel ein Glan-Prisma umfassen (9).

3. Sende-/Empfangskopf nach einem der Ansprüche 1 und 2, bei dem die Polarisierungsumschaltmittel Mittel mit elektrisch-optischer Wirkung umfassen.

4. Sende-/Empfangskopf nach einem der Ansprüche 1 und 2, bei dem die Polarisierungsumschaltmittel Mittel mit elastisch-optischer Wirkung umfassen.

5. Sende-/Empfangskopf nach einem der Ansprüche 1 bis 4, mit einem die Ausgangsoptik bildenden Teleskop.

## Claims

1. An emission and reception head for a laser-type longitudinal Doppler anemometer, with at least one pair of measuring axes, characterised by the fact that it comprises:
- polarisation switching means (4) on the path of the laser beam,
- polarisation separating means (8) on the path of the polarised beam issuing from the switching means,
- control means (5) for switching the switching means alternately from one state to another so as to direct the beam alternately onto one measuring axis and then onto another according to its polarisation state,
- the separating means being arranged so that the beam which issues therefrom is moved parallel to itself during switching, an exit lens (15) being arranged to direct the beam onto one of the measuring axes according to its movement,
- and a quarter-wave plate (13) being provided at the exit from the polarisation separating means.

2. An emission and reception head according to Claim 1, in which the separating means comprise a Glan prism (9).

3. An emission and reception head according to either one of Claims 1 and 2, in which the polarisation switching means comprise electro-optical effect means.

4. An emission and reception head according to either one of Claims 1 and 2, in which the polarisation switching means comprise elasto-optical effect means.

5. An emission and reception head according to any one of Claims 1 to 4, comprising a telescope forming an exit lens.
